# EUROPÄISCHE PATENTANMELDUNG

(11) **EP 3 219 416 A1**
(43) Veröffentlichungstag der Anmeldung: **20.09.2017**
(21) Anmeldenummer: 16000644.1
(22) Anmeldetag: 16.03.2016
(51) Int. Cl.: B22F 3/105, B29C 67/00

(54) **VERFAHREN UND VORRICHTUNG ZUM GENERATIVEN FERTIGEN EINES DREIDIMENSIONALEN BAUTEILS**

(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Bell Hill, Hook Norton OX15 5PS (GB); Foret, Pierre, 80796 München (DE)
(74) Vertreter: Gellner, Bernd

(57) **Zusammenfassung**

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials in einer im Wesentlichen horizontalen Arbeitsebene,
- Zuführen eines Prozessgases zum Ausgangsmaterial,
- Schmelzen des Ausgangsmaterials mit einer Wärmequelle,
- Kühlen und Verfestigen, und
- Wiederholen der vorstehenden Schritte.

Das erfindungsgemäße Verfahren zeichnet sich dadurch aus, dass in einem weiteren Schritt nach dem Schritt des Bereitstellen eines metallischen Ausgangsmaterials in einer Arbeitsebene zumindest ein Teil des Prozessgases in einem unteren Bereich der Prozesskammer, wobei dieser untere Bereich in etwa auf Höhe der Arbeitsebene oder darunter liegt, zugeführt wird, wobei dieser Schritt als erste Spülstufe bezeichnet wird.

## Beschreibung

Die vorliegende Erfindung betrifft ein Verfahren und eine Vorrichtung zum generativen Fertigen eines dreidimensionalen Bauteils.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs-oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering.

Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LFM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen und erstarrt anschließend in der gewünschten Kontur. Die dafür erforderliche Energie wird durch einen Elektronenstrahl eingebracht. Das Verfahren erfolgt meistens in einer Inertgas-gefluteten Unterdruck-Kammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Bei Verwendung einer Inertgasatmosphäre verbleibt die Zusammensetzung des aufgebrachten Ausgangsmaterials im Wesentlichen unverändert, nachdem sie mittels einer Wärmequelle aufgeschmolzen wurden. Durch die Aufschmelzung, Erstarrung und Wärmeeinflusszonen werden die metallurgischen Eigenschaften gegenüber dem ursprünglichen Material verändert.

Die Prozessgasatmosphäre bei Vorrichtungen zum generativen Fertigen, wie z.B. bei Laser-Schmelz-Vorrichtungen (LMF(laser metal fusion)-Vorrichtungen, wird kontinuierlich durch Hinzufügen von sauberem Prozessgas gereinigt, um Verunreinigungen unterhalb eines erlaubten Schwellenwerts zu halten.

Weiterhin wird bei diesem Verfahren ein aufzubauendes Bauteil schrittweise mit Metallpulver verdeckt, was dazu führt, dass im Bauteil Hitze gestaut wird, die nicht mittels Konvektion entfernbar ist.

LMF-Verfahren finden in einer Prozesskammer statt, die mit einem Prozessgas gefüllt ist. Üblicherweise wird dabei ein Inertgas verwendet, bei dem die Verunreinigungen strickt kontrolliert werden müssen. Beispielsweise darf der Sauerstoffgehalt nicht einen bestimmten Schwellenwert zwischen 1ppm und 1000ppm übersteigen. Ein weiteres Beispiel für Verunreinigungen ist die im Prozessraum vorliegende Feuchtigkeit, die ebenfalls streng kontrolliert werden muss. Weiter Beispiele für Verunreinigungen sind Stickstoff, Wasserstoff, CO₂ und andere Gase.

Wenn die Prozesskammer geöffnet wird, um ein hergestelltes Bauteil zu entnehmen und um anschließend mit der Herstellung eines neuen Bauteils zu beginnen, tritt Umgebungsluft in die Prozesskammer ein. Diese Umgebungsluft muss durch Spülen der Kammer mit Inertgas entfernt werden, bis ein Sauerstoffanteil auf einen bestimmten Schwellenwert gesunken ist. Das Gas zum Spülen wird in die Prozesskammer über einen oder mehrere Gaseinlässe eingebracht. Das Spülen der Kammer benötigt relativ viel Zeit, insbesondere wenn die Schwellenwerte der Verunreinigungen niedrig sind.

Eine andere Quelle für Verunreinigungen ist das Pulver selbst, das Verunreinigungen an der Oberfläche der Partikel absorbiert haben kann, die dann während des Schmelzprozesses frei gesetzt werden und dadurch die Prozessgasatmosphäre kontaminieren. Daher findet ein kontinuierlicher Reinigungsvorgang bzw. Spülvorgang der Prozesskammer statt, um die Verunreinigungen unterhalb eines erlaubten Schwellenwertes zu halten.

Weiterhin ist der im herzustellenden Bauteil auftretende Hitzestau ein limitierender Faktor für den Herstellungsprozess. Die sich im Bauteil anstauende Hitze wird momentan nur durch thermische Konduktivität im aufzubauenden Bauteil selbst entfernt, da der Wärmeübergang zum umgebenden Pulver sehr schlecht ist. Dies liegt daran, dass es keinen richtigen Grenzbereich zwischen dem herzustellenden Bauteil und dem umgebenden Pulverpartikeln gibt, daher ist der Wärmeübergang auf die umgebende Partikel gering, da das zwischen den Partikeln vorliegende Gas eine Isolationswirkung hat.

Da sich die Wärme im aufzubauenden Bauteil immer weiter aufstaut, verändern sich die Prozessparameter permanent während des Herstellungsprozesses und führen zu unterschiedlichen Schmelzverhalten der Pulverpartikel. Dies beeinflusst die Geometrie, das Zusammenfügen und das Aneinanderhaften der Pulverpartikel. Je mehr Hitze sich im Bauteil staut, desto mehr Prozessinstabilitäten treten auf.

Sich verändernde Wärmebedingungen, insbesondere lokal begrenzt auf den Schmelzbereich als auch im gesamten Bauteil, können metallurgische Konsequenzen haben, die beispielsweise die Korngröße und die Kristallisation beeinflussen. Im Pulverbett vorhandene Verunreinigungen wie z. B. O₂ und H₂O usw. werden während des Prozesses freigesetzt.

Aufgabe der vorliegenden Erfindung ist es daher ein generatives Fertigungsverfahren und eine entsprechende Vorrichtung, insbesondere ein LMF-Verfahren und eine LMF-Vorrichtung bereitzustellen, bei denen die Prozesskammer bzw. die Prozessgasatmosphäre effizient und auf einfach Art und Weise und insbesondere schneller von Verunreinigungen befreit werden kann.

Eine weitere Aufgabe der vorliegenden Erfindung besteht darin ein LMF-Verfahren und eine LMF-Vorrichtung bereitzustellen, bei dem sich die im Bauteil aufstauende Wärme schneller und effizienter abführen lässt.

Diese Aufgaben werden durch die unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials in einer im Wesentlichen horizontalen Arbeitsebene,
- Zuführen eines Prozessgases zum Ausgangsmaterial,
- Schmelzen des Ausgangsmaterials mit einer Wärmequelle, und
- Wiederholen der vorstehenden Schritte.

Das erfindungsgemäße Verfahren zeichnet sich dadurch aus, dass in einem weiteren Schritt nach dem Schritt des Bereitstellen eines metallischen Ausgangsmaterials in einer Arbeitsebene zumindest ein Teil des Prozessgases in einem unteren Bereich der Prozesskammer, wobei dieser untere Bereich in etwa auf Höhe der Arbeitsebene oder darunter liegt, zugeführt wird, wobei dieser Schritt als erste Spülstufe bezeichnet wird.

Unter dem Zuführen des Prozessgases in einem unteren Bereich der Prozesskammer in etwa auf Höhe der Arbeitsebene oder darunter wird im Rahmen der vorliegenden Erfindung verstanden, dass das Prozessgas der Prozesskammer derart zugeführt wird, dass sich die Kammer von unten nach oben mit Prozessgas füllt. Somit ist erfindungsgemäß vorgesehen, dass das Prozessgas auf Höhe der Arbeitsebene oder darunter zugeführt wird.

Das erfindungsgemäße Verfahren kann vorzugsweise ein Laser-SchmelzVerfahren betreffen.

Unter einer Arbeitsebene wird im Rahmen der vorliegenden Erfindung eine Ebene verstanden, die in etwa auf Höhe des Bereichs liegt, in dem ein metallisches Ausgangsmaterial bereitgestellt wird. Wenn z. B. das metallische Ausgangsmaterial auf einer Bauplattform angeordnet wird und diese Bauplattform in vertikaler Richtung verschiebbar ausgebildet ist, dann ist die Arbeitsebene immer die Ebene der zuletzt aufgetragenen Schicht an Ausgangsmaterial.

Die Prozessgaszuführeinrichtung bzw. deren Düse kann demnach das Prozessgas in jeder Höhe zwischen der Arbeitsebene und einem Boden der Prozesskammer angeordnet sein und das prozessgas zuführen bspw. im Bereich des Bodens oder auf einem Fünftel einem Viertel, der Hälfte, zwei Drittel oder drei Viertel der Höhe in vertikaler Richtung zwischen Boden und Arbeitsebene oder auf Höhe der Arbeitsebene.

Mittels des erfindungsgemäßen Verfahrens wird die Zeit zum Spülen der Prozesskammer erheblich reduziert. Somit ist es mittels des erfindungsgemäßen Verfahrens möglich die Verunreinigungen in der Prozesskammer effizienter zu reduzieren bzw. schneller unterhalb eines vorbestimmten Schwellenwertes zu bringen.

Als Prozessgas ist vorzugsweise ein Inertgas, das bei gleicher Temperatur eine höhere Dichte als Luft aufweist, wie z.B. Argon vorgesehen.

Das Inertgas kann vorzugsweise eine Temperatur aufweisen, die niedriger als die Temperatur der in der Prozesskammer vorliegenden Luft ist.

Dadurch, dass die Prozessgaszuführung bzw. das Prozessgas auf Höhe der Arbeitsebene oder darunter zugeführt wird, füllt sich die Kammer von unten nach oben mit dem Prozessgas.

Auf diese Weise drückt das schwerere gasförmige Argon die leichtere Luft in den oberen Bereich der Prozesskammer, in dem ein Auslass zum Abführen der Luft vorgesehen ist.

Durch Art und Weise Prozessgas in die Prozesskammer einzubringen, ist es möglich, eine homogenere Prozessgasatmosphäre in der gesamten Prozesskammer bereitzustellen.

Weiterhin wird durch die unmittelbare Nähe des Bereichs, in dem das Prozessgas in die Prozesskammer eintritt, zum Pulverbett eine konstante Atmosphäre beim generativen Fertigen des Bauteils an der obersten Schicht des Bauteils erzeugt.

Unter einem generativen Fertigen wird im Rahmen der vorliegenden Erfindung das Lagen bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

Zudem ist es Mittels des erfindungsgemäßen Verfahrens möglich, das Bauteil während der Herstellung zu kühlen.

Auf diese Weise bleiben die Prozessparameter stabil und es sind homogene metallurgische Effekte während der Herstellung erzielbar.

Mittels des erfindungsgemäßen Verfahrens ist es zudem auf einfache Art und Weise möglich, durch das Hinzufügen von sauberem Prozessgas, die Verunreinigungen unterhalb eines erlaubten Schwellenwerts zu halten. Durch die Einbringung von sauberem Gas sind Verunreinigungen die im Prozessraum und/oder im Metallpulver vorliegen wie z.B. Feuchtigkeit Stickstoff, Wasserstoff, CO₂ und andere Gase schnell und effizient aus diesem Bereich austreibbar.

Das Prozessgas kann der Prozesskammer über einen oder mehrere Einlässe zugeführt werden, wobei die Einlässe derart in einem unteren Bereich der Prozesskammer angeordnet sind, dass ein Spülvorgang in der Prozesskammer optimiert ist.

Insbesondere kann vorgesehen sein, dass zumindest ein Teil des Prozessgases durch das Ausgangsmaterial, das als Pulverbett vorliegt, hindurch zugeführt wird.

Somit besteht ein weiterer Vorteil der vorliegenden Erfindung darin, dass dadurch, dass das Gas unterhalb des Pulverbetts und/oder durch dieses hindurch zugeführt wird Turbulenzen bzw. Verwirbelungen in der Prozesskammer vermieden werden. Derartige Turbulenzen bzw. Verwirbelungen werden bei aus dem Stand der Technik bekannten Vorrichtungen meist durch das Einbringen eines Gasstroms oberhalb des Pulverbetts erzeugt. Die Zuführungen für das Prozessgas sind bei bekannten Vorrichtung teilweise hinter Abdeckungen angebracht, d.h. das Prozessgas strömt unkontrolliert irgendwie in die Prozesskammer.

Auf diese Weise werden zudem Verunreinigungen, insbesondere gasförmige Verunreinigungen, aus dem Pulverbett ausgetragen. Gleichzeitig kühlt der Gasstrom das Pulverbett und die Schichten des herzustellenden Bauteils.

Dadurch, dass das Gas durch das Pulverbett nach oben strömt, wird ein verbesserter Wärmetransfer vom aufzubauenden Bauteil über erzwungene Konvektion erreicht.

In einem weiteren Schritt kann das zugeführte Prozessgas in der Prozesskammer mittels zumindest einer Ventilatoreinrichtung verwirbelt werden.

Während des Verwirbelns des Prozessgases kann somit in der Prozesskammer vorhandene Luft über einen, an einem oberen Bereich der Prozesskammer angeordneten und geöffneten, Auslass aus der Prozesskammer abgeführt werden, so dass die Prozesskammer gespült wird, wobei dieser Schritt als zweite Spülstufe bezeichnet wird.

Durch die Verwirbelung ist es möglich Verunreinigungen aus den Toträumen der Prozesskammer zu entfernen. In diesen Toträumen kann sich relativ lange Zeit Luft halten, die erst nach der Herstellung und Entnahme eines Bauteils aus der Prozesskammer sauber gespült wird. Mittels der Ventilatoreinrichtung könne diese Toträume zu beliebigen Zeitpunkten währen der Herstellung eines Bauteils gespült werden.

Auf diese Weise wird eine homogene Gaszusammensetzung über das gesamte Volumen der Prozesskammer bereitgestellt, wodurch der Spülvorgang optimiert wird.

Gemäß der zweiten Stufe ist zudem vorgesehen, dass über den zumindest einen Einlass bzw. über die Einlässe kontinuierlich sauberes Prozessgas der Prozesskammer zugeführt wird, wobei wie bereits vorstehend beschrieben, das in der Kammer vorhandene Gas über einen im oberen Bereich der Prozesskammer angeordneten Auslass abgeführt werden kann.

Das abgeführte Gas kann entweder abgelassen, wiederverwendet und gereinigt und erneut in die Kammer über die Gaseinlässe eingebracht werden.

In einem weiteren Schritt, in dem mit der Fertigung des Bauteils begonnen wird, können die Verwirbelungen derart reduziert werden dass vom Ausgangsmaterial abgegebene Verunreinigungen zumindest aus dem Bereich der Prozesskammer in dem das Bauteil hergestellt wird abgeführt werden, wobei dieser Schritt als dritte Spülstufe bezeichnet wird.

Gemäß der dritten Spülstufe ist vorgesehen, dass wenn die Prozessgasatmosphäre einen zulässigen Schwellenwert für Verunreinigungen erreicht hat, die Drehzahl der Ventilatoreinrichtung bzw. die Verwirbelungen reduziert werden, so dass mit der Fertigung eines herzustellenden Bauteils begonnen werden kann.

In dieser dritten Stufe wird die Drehzahl der Ventilatoreinrichtung reduziert und somit der Gasfluss in die Prozesskammer derart reduziert, dass Verunreinigungen, die vom Pulverbett freigesetzt werden, entfernbar sind, so dass die Verunreinigungen in der Prozesskammer den erlaubten Schwellenwert nicht überschreiten.

Weiterhin können die eine oder die mehreren Spülstufen von einer Steuereinrichtung gesteuert werden.

Weiterhin ist erfindungsgemäß eine Laser-Schmelz-Vorrichtung zum generativen Fertigen eines Bauteils vorgesehen. Diese Vorrichtung umfasst:
- eine horizontal angeordnete Bauplattform zur Aufnahme des Ausgangsmaterials in einer Arbeitsebene,
- eine Auftrageinrichtung zum Aufbringen des Ausgangsmaterials auf die Bauplattform
- eine Wärmequelle,
- eine Prozessgaszuführeinrichtung, mittels der die Prozesskammer mit einem Prozessgas beaufschlagbar ist.

Die erfindungsgemäße Vorrichtung zeichnet sich dadurch aus, dass die Prozessgaszuführeinrichtung zumindest einen Einlass zum Zuführen von Prozessgas in die Prozesskammer umfasst, der in einem unteren Bereich der Prozesskammer, in etwa auf Höhe der Arbeitsebene oder darunter, angeordnet ist.

Die Vorteile der erfindungsgemäßen Vorrichtung sind im Wesentlichen dieselben Vorteile, die bereits vorstehend zum erfindungsgemäßen Verfahren erläutert wurden.

Zumindest ein Einlass, wie z.B. eine Düse der Prozessgaszuführeinrichtung ist im Bereich des Bodens oder auf einem Fünftel einem Viertel, der Hälfte, zwei Drittel oder drei Viertel der Höhe zwischen Boden der Prozesskammer und Arbeitsebene oder in etwa auf Höhe der Arbeitsebene angeordnet.

Die Vorrichtung kann zumindest eine Ventilatoreinrichtung zum Verwirbeln des Prozessgases aufweisen, die in der Prozesskammer angeordnet ist.

Die Ventilatoreinrichtung kann in einem unteren Bereich der Prozesskammer angeordnet sein

Weiterhin kann eine Steuereinrichtung zum Steuern der Prozessgaszuführeinrichtung und/oder der Ventilatoreinrichtung vorgesehen sein, wobei die Steuereinrichtung eine Regeleinrichtung mit einem geschlossenen Regelkreis umfasst, die den Volumenstrom des Prozessgases und/oder die Drehzahl der Ventilatoreinrichtung regelt.

Die Erfindung wird im Folgenden an Hand einer Figur näher erläutert.

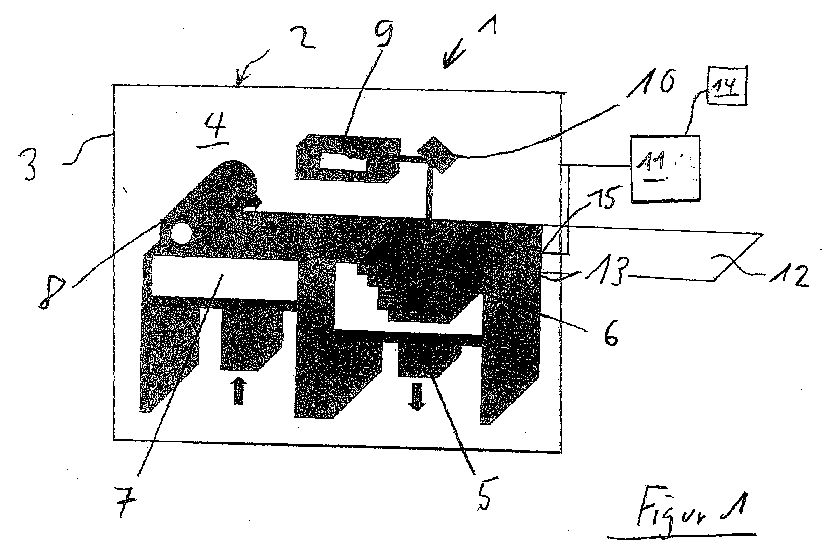

Figur 1 eine schematische Darstellung einer erfindungsgemäßen Vorrichtung.

Im Folgenden wird eine Vorrichtung 1 zum generativen Fertigen und Kodieren eines dreidimensionalen Bauteils beschrieben. Grundsätzlich ist, wie bereits vorstehend erwähnt, jede Vorrichtung zum generativen Fertigen von dreidimensionalen Bauteilen zum Ausführen des erfindungsgemäßen Verfahrens geeignet.

Die Vorrichtung ist eine Laser-Schmelz-Vorrichtung 1. Die Laser-Schmelz-Vorrichtung 1 umfasst eine Prozesskammer 2, die durch eine Kammerwandung 3 nach außen hin abgeschlossen ist und einen Prozessraum 4 begrenzt. Die Prozesskammer 2 dient als Bauraum für das dreidimensionale Bauteil.

In der Prozesskammer 2 ist ein nach oben offener Behälter 13 angeordnet. In dem Behälter 13 ist eine Bauplattform 5 zur Aufnahme des zu fertigenden Bauteils 8 angeordnet. Die Bauplattform 5 weist eine Höhenverstelleinrichtung (nicht dargestellt) auf, mittels der die Bauplattform 5 in vertikaler Richtung derart einstellbar ist, dass eine Oberfläche einer neu zu verfestigenden Schicht in einer Arbeitsebene 12 liegt.

Weiterhin umfasst die Vorrichtung 1 einen Vorratsbehälter 7. Der Vorratsbehälter 7 ist zur Aufnahme eines verfestigbaren pulverförmigen Ausgangsmaterials ausgebildet.

Weiterhin ist eine Auftrageinrichtung 8 zum Aufbringen des Ausgangsmaterials auf die Bauplattform 5 vorgesehen. Eine solche Auftrageinrichtung 8 ist in horizontaler Richtung parallel zu der Arbeitsebene beweglich.

Zudem ist ein Laser 9 zum Erzeugen eines Laserstrahls bzw. eine Wärmequelle vorgesehen. Ein von dem Laser 9 erzeugter Laserstrahl wird über eine Umlenkeinrichtung 10 umgelenkt und durch eine Fokussiereinrichtung (nicht dargestellt) auf einen vorbestimmten Punkt unmittelbar unterhalb der Arbeitsebene 13 fokussiert. Mittels der Umlenkeinrichtung 10 kann der Verlauf des Laserstrahls derart verändert werden, dass er die dem Querschnitt des herzustellenden Objekts entsprechenden Stellen der aufgetragenen Schicht aufschmilzt.

Zudem ist eine Prozessgaszuführeinrichtung 11 vorgesehen, mittels der die Prozesskammer 2 mit einem Prozessgas beaufschlagbar ist.

Die Prozessgaszuführeinrichtung 11 weist einen Vorratsbehälter für das Prozessgas auf, wobei der Prozessgasvorratsbehälter (nicht dargestellt) über einen bzw. mehrere Leitungsabschnitte mit in die Prozesskammer mündenden Einlässen (nicht dargestellt) verbunden ist. Die Einlässe, z.B. eine oder mehrere Düsen 15 zum Zuführen von Prozessgas sind in einem unteren Bereich der Prozesskammer angeordnet. Das bedeutet zumindest eine Düse der Prozessgaszuführeinrichtung ist im Bereich des Bodens oder auf einem Fünftel einem Viertel, der Hälfte, zwei Drittel oder drei Viertel der Höhe zwischen Boden der Prozesskammer und Arbeitsebene 13 oder in etwa auf Höhe der Arbeitsebene angeordnet.

Als Prozessgas ist vorzugsweise ein Inertgas, das bei gleicher Temperatur eine höhere Dichte als Luft aufweist, wie z.B. Argon vorgesehen.

Ebenfalls in einem unteren Bereich der Prozesskammer ist eine Ventilatoreinrichtung (nicht dargestellt) angeordnet. Es können auch mehrere Ventilatoreinrichtungen vorgesehen sein.

Weiterhin umfasst die Vorrichtung 1 eine Steuereinrichtung 14 zum Steuern der des Volumenstroms der Gaszuführeinrichtung und/oder der Ventilatoreinrichtung. Die Steuereinrichtung kann eine und vorzugsweise zwei Regeleinrichtungen (nicht dargestellt) mit einem geschlossenen Regelkreis umfassen, die den Volumenstrom bzw. die Drehzahl regeln. Die Regeleinrichtungen können einen P-Regler, einen I-Regler, einen D-Regler und Kombinationen daraus, wie z.B. einen PID-Regler umfassen. Die Regeleinrichtung zum Regeln der Prozessgaszuführung erfasst mittels zumindest eines Volumenstromsensors einen Ist-Wert eines Volumenstroms des Prozessgases und vergleicht diesen mit einem vorgegebenen Sollwert, wobei über ein Stellglied der vorgegebene Sollwert eingestellt wird. Die Regeleinrichtung zum Regeln der Drehzahl der Ventilatoreinrichtung erfasst mittels zumindest eines Drehzahlsensors einen Ist-Wert einer Drehzahl der Ventilatoreinrichtung und vergleicht diesen mit einem vorgegebenen Sollwert, wobei über ein Stellglied der vorgegebene Sollwert eingestellt wird.

Im Folgenden wird ein erfindungsgemäßes Verfahren anhand eines ersten Ausführungsbeispiels beschrieben.

Dabei wird im ersten Schritt ein metallisches Ausgangsmaterial auf der Bauplattform in Form eines Pulverbetts mittels der Auftrageinrichtung aufgebracht bzw. bereitgestellt. Alternativ kann das metallische Ausgangsmaterial auch mittels einer Pulverzuführung oder einer Drahtzuführung zugeführt werden.

Anschließend wird in einem zweiten Schritt zumindest ein Teil des Prozessgases in einem unteren Bereich der Prozesskammer zugeführt. Dieser Schritt wird als erste Spülstufe bezeichnet. Dieser und die nachfolgenden Schritte werden von der Steuereinrichtung 14 gesteuert.

Dadurch, dass die Prozessgaszuführeinrichtung 11 das Prozessgas auf Höhe der Arbeitsebene 12 oder darunter zugeführt wird, füllt sich die Prozessammer von unten nach oben mit dem Prozessgas.

Auf diese Weise drückt das schwerere gasförmige Argon die leichtere Luft in den oberen Bereich der Prozesskammer, in dem ein Auslass zum Abführen der Luft vorgesehen ist.

In einem weiteren Schritt wird das zugeführte Prozessgas in der Prozesskammer mittels der Ventilatoreinrichtung verwirbelt.

Während des Verwirbelns des Prozessgases wird in der Prozesskammer vorhandene Luft über einen, an einem oberen Bereich der Prozesskammer angeordneten und geöffneten, Auslass aus der Prozesskammer abgeführt, so dass die Prozesskammer gespült wird, wobei dieser Schritt als zweite Spülstufe bezeichnet wird.

Durch die Verwirbelung werden Verunreinigungen aus den Toträumen der Prozesskammer entfernt. Zudem wird eine homogene Gaszusammensetzung über das gesamte Volumen der Prozesskammer bereitgestellt, wodurch der Spülvorgang optimiert wird.

Während der zweiten Spülstufe wird der Prozesskammer permanent sauberes Prozessgas zugeführt, wobei wie bereits vorstehend beschrieben, das in der Kammer vorhandene Gas über einen im oberen Bereich der Prozesskammer angeordneten Auslass abgeführt werden kann.

In einem nächsten Schritt werden, wenn die Prozessgasatmosphäre einen zulässigen Schwellenwert für Verunreinigungen erreicht hat, die Verwirbelungen bzw. die Drehzahl der Ventilatoreinrichtung derart reduziert, dass vom Ausgangsmaterial abgegebene Verunreinigungen, zumindest aus dem Bereich der Prozesskammer in dem das Bauteil hergestellt wird, abgeführt werden. Dieser Schritt wird als dritte Spülstufe bezeichnet.

In einem dazu parallel ablaufenden Schritt wird das Ausgangsmaterial mittels des Lasers aufgeschmolzen.

Weiterhin kann ein Stabilisierungsschritt vorgesehen sein, in dem die Schicht abgekühlt und verfestigt wird.

Diese Schritte werden wiederholt.

### Bezugszeichenliste:

- 1: Vorrichtung
- 2: Prozesskammer
- 3: Kammerwandung
- 4: Prozessraum
- 5: Bauplattform
- 6: Bauteil
- 7: Vorratsbehälter
- 8: Auftrageinrichtung
- 9: Laser
- 10: Umlenkeinrichtung
- 11: Prozessgaszuführeinrichtung
- 12: Arbeitsebene
- 13: Behälter
- 14: Steuereinrichtung
- 15: Einlass, Düse

## Patentansprüche

1. Verfahren zum generativen Fertigen eines dreidimensionalen Bauteils umfassend die folgenden Schritte
- Bereitstellen eines metallischen Ausgangsmaterials in einer Arbeitsebene,
- Zuführen eines Prozessgases zum Ausgangsmaterial,
- Schmelzen des Ausgangsmaterials mit einer Wärmequelle,
- Wiederholen der vorstehenden Schritte
**dadurch gekennzeichnet,**
**dass** in einem weiteren Schritt nach dem Schritt des Bereitstellen eines metallischen Ausgangsmaterials in einer Arbeitsebene zumindest ein Teil des Prozessgases in einem unteren Bereich der Prozesskammer zugeführt wird,
wobei dieser untere Bereich in etwa auf Höhe der oder darunter Arbeitsebene liegt, und wobei dieser Schritt als erste Spülstufe bezeichnet wird.

2. Verfahren nach Anspruch 1,
**dadurch gekennzeichnet,**
**dass** als Prozessgas Argon vorgesehen ist

3. Verfahren nach Anspruch 1 oder 2,
**dadurch gekennzeichnet,**
**dass** in einem weiteren Schritt das zugeführte Prozessgas in der Prozesskammer mittels zumindest einer Ventilatoreinrichtung verwirbelt wird.

4. Verfahren nach einem der Ansprüche 1 bis 3,
**dadurch gekennzeichnet,**
**dass** zumindest ein Teil des Prozessgases durch das Ausgangsmaterial, das als Pulverbett vorliegt, hindurch zugeführt wird.

5. Verfahren nach einem der Ansprüche 1 bis 4,
**dadurch gekennzeichnet,**
**dass** während des Verwirbelns des Prozessgases in der Prozesskammer vorhandene Luft über einen an einem oberen Bereich der Prozesskammer angeordneten und geöffneten Auslass aus der Prozesskammer abgeführt wird, so dass die Prozesskammer gespült wird, wobei dieser Schritt als zweite Spülstufe bezeichnet wird.

6. Verfahren nach einem der Ansprüche 1 bis 5,
**dadurch gekennzeichnet,**
**dass** in einem weiteren Schritt die Verwirbelungen derart reduziert werden, und die Fertigung des Bauteils beginnt, dass vom Ausgangsmaterial abgegebene Verunreinigungen zumindest aus dem Bereich der Prozesskammer in dem das Bauteil hergestellt wird abgeführt werden, wobei dieser Schritt als dritte Spülstufe bezeichnet wird.

7. Verfahren nach einem der Ansprüche 1 bis 6,
**dadurch gekennzeichnet,**
**dass** eine oder mehrere der Spülstufen von einer Steuereinrichtung gesteuert werden.

8. Vorrichtung zum generativen Fertigen eines Bauteils umfassend
- eine Prozesskammer, die durch eine Kammerwandung nach außen hin abgeschlossen ist
- eine horizontal angeordnete Bauplattform zur Aufnahme des Ausgangsmaterials
- eine Auftragseinrichtung zum Aufbringen des Ausgangsmaterials auf die Bauplattform
- eine Wärmequelle,
- eine Prozessgaszuführeinrichtung vorgesehen, mittels der die Prozesskammer mit einem Prozessgas beaufschlagbar ist
**dadurch gekennzeichnet,**
**dass** die Prozessgaszuführeinrichtung zumindest einen Einlass zum Zuführen von Prozessgas in die Prozesskammer umfasst, der in einem unteren Bereich der Prozesskammer, unterhalb der Arbeitsebene angeordnet ist.

9. Vorrichtung nach Anspruch 8,
**dadurch gekennzeichnet,**
**dass** zumindest eine Ventilatoreinrichtung zum Verwirbeln des Prozessgases in der Prozesskammer angeordnet ist.

10. Vorrichtung nach Anspruch 8 oder 9,
**dadurch gekennzeichnet,**
**dass** die Ventilatoreinrichtung in einem unteren Bereich der Prozesskammer angeordnet ist

11. Vorrichtung nach einem der Ansprüche 8 bis 10,
**dadurch gekennzeichnet,**
**dass** eine Steuereinrichtung zum Steuern der Prozessgaszuführeinrichtung und/oder der Ventilatoreinrichtung vorgesehen ist, wobei die Steuereinrichtung eine Regeleinrichtung mit einem geschlossenen Regelkreis umfasst, die den Volumenstrom des Prozessgases und/oder die Drehzahl der Ventilatoreinrichtung regelt.

12. Vorrichtung nach einem der Ansprüche 8 bis 11,
**dadurch gekennzeichnet,**
**dass** eine Düse der Prozessgaszuführeinrichtung im Bereich des Bodens oder auf einem Fünftel einem Viertel, der Hälfte, zwei Drittel oder drei Viertel der Höhe in vertikaler Richtung zwischen Boden der Prozesskammer und Arbeitsebene oder in etwa auf Höhe der Arbeitsebene angeordnet ist.
